(19) Europäisches Patentamt
European Patent Office
Office européen des brevets

(11) Publication number: **0 051 438**
**A1**

(12) **EUROPEAN PATENT APPLICATION**

(21) Application number: **81305092.9**

(22) Date of filing: **28.10.81**

(51) Int. Cl.³: **C 25 B 11/12**
**C 08 L 27/18, C 09 C 1/56**
**H 01 M 4/88**

(30) Priority: **31.10.80 US 202575**

(43) Date of publication of application:
**12.05.82 Bulletin 82/19**

(84) Designated Contracting States:
**AT BE CH DE FR GB IT LI LU NL SE**

(71) Applicant: **DIAMOND SHAMROCK CORPORATION**
**717 North Harwood Street**
**Dallas Texas 75201(US)**

(72) Inventor: **Solomon, Frank**
**8 Hampton Court**
**Great Neck New York 11020(US)**

(74) Representative: **Oliver, Roy Edward**
**POLLAK, MERCER & TENCH High Holborn House 52-54**
**High Holborn**
**London WC1V 6RY(GB)**

(54) Electrode backing layer and method of preparing.

(57) This disclosure is directed to the preparation of cohesive, self-sustaining electrode backing layers by a method comprising mixing from 5 to 50 weight parts of polytetrafluoroethylene (PTFE) having a particle size ranging from 0.05 to 0.5 micron with from 95 to about 50 weight parts of carbon black of a particle size ranging from about 50 to 3000 angstroms and a density of about 1.95 grams per cubic centimeter, to produce an electrode backing layer having enhanced electrical conductivity compared to backing layers made from PTFE alone.

EP 0 051 438 A1

- 1 -

ELECTRODE BACKING LAYER AND METHOD OF PREPARING

BACKGROUND OF THE INVENTION

In the field of electrochemistry there is a well-known electrochemical cell known as a chlor-alkali cell. In this cell, an electric current is passed through a saturated brine (sodium chloride salt) solution to produce chlorine gas and caustic soda (sodium hydroxide). A large portion of the chlorine and caustic soda for the chemical and plastics industries are produced in chlor-alkali cells.

Such cells are divided by a separator into anode and cathode compartments. The separator characteristically can be a substantially hydraulically impermeable membrane, e.g., a hydraulically impermeable cation exchange membrane, such as the commercially available NAFION® manufac-tured by the E. I. du Pont de Nemours & Company. Alternatively, the separator can be a porous diaphragm, e.g., asbestos, which can be in the form of vacuum deposited fibers or asbestos paper sheet as are well known in the art. The anode can be a valve metal, e.g., titanium, provided with a noble metal coating to yield what is known in the art as a dimensionally stable anode.

One of the unwanted byproducts present in a chlor-alkali cell is hydrogen which forms at the cell cathode. This hydrogen increases the power requirement for the overall electrochemical process, and eliminating its formation is one of the desired results in chlor-alkali cell operation.

It has been estimated that 25 percent of the electrical energy required to operate a chlor-alkali cell is utilized due to the formation of hydrogen at the cathode. Hence, the prevention of hydrogen formation, e.g., by reacting water with oxygen at the cathode resulting in the formation of hydroxide, can lead to substantial savings in the cost of electricity required to operate the cell. In fairly recent attempts to achieve cost savings and energy savings in respect of operating chlor-alkali cells, attention has been directed to various forms of what are known as oxygen (air) cathodes. These cathodes prevent the formation of molecular hydrogen at the cathode and instead reduce oxygen to form hydroxyl ions. Savings in cost for electrical energy are thereby achieved.

One known form of oxygen (air) cathode involves use of an active layer containing porous active carbon particles whose activity in promoting the formation of hydroxide may or may not be catalyzed (enhanced) using precious metal catalysts, such as silver, platinum, etc. Unfortunately, however, the pores of such active carbon particles may become flooded with the caustic soda thereby significantly reducing their ability to catalyze the reduction of oxygen at the air cathode and resulting in decreased operating efficiency. In an attempt to overcome these difficulties in flooding of the active carbon, hydrophobic materials, e.g., polytetrafluoroethylene (PTFE), have been employed in particulate or fibrillated (greatly attenuated and elongated) form to impart hydrophobicity to the active carbon layer, per se, and/or to a protective (wetproofing) or backing sheet which can be laminated or otherwise attached to the active layer. Thus, PTFE has been employed in both active layers and in backing (wetproofing) layers secured thereto. Such active carbon-containing layers, however, are subjected to loss of strength resulting in failure combined with blistering thereof when the chlor-alkali cell is operated at high current densities, viz., current densities of about 250 milliamperes/cm$^2$ and higher for prolonged time periods.

It is customary to employ porous carbon particles (with or without precious metal catalyst depositing thereon) as the active catalyst material in the so-called active layer of electrodes utilized in such a chlor-alkali cell. One problem which has been encountered in the use of catalyzed or uncatalyzed porous carbon particles in the active layer is that they tend to become wetted by (and therefore have their catalytic activity severly dimished by) the catholyte liquor, viz., the caustic soda (sodium hydroxide). Various attempts have been made to solve this wettability problem. By providing a backing layer which is porous and hydrophobic, wetting of the back of the active layer by caustic soda may be prevented thus allowing continuous access of oxygen to the active layer. Various forms of polytetrafluoroethylene (PTFE) have been utilized for such an electrode backing. PTFE, however, is not electrically conductive, precluding electrically contacting the active layer through the hydrophobic PTFE porous backing layer.

## FIELD OF THE INVENTION

The primary field to which this invention is directed is the preparation of an electrically conductive yet hydrophobic backing layer which can be used in direct association with an active carbon particle-containing active layer which serves as a component of an oxygen (air) cathode in a chlor-alkali cell or a cell wherein an electrochemical reaction takes place, e.g., fuel cell, nickel-air battery, etc.

## PRIOR ART

U.S. Patent 3,385,780 to I-Ming Feng discloses a thin, porous electrode consisting of a thin layer of a polytetrafluoroethylene pressed against a thin layer of polytetrafluoroethylene containing finely divided platinized carbon, the platinum being present in amounts of 1.2 to 0.1 milligrams per square centimeter in the electrically conductive face of the thin electrode, viz., the side containing the platinized carbon, viz., the active layer. A thermally decomposable filler material can be used, or the filler can be a material capable of being leached out by either a strong base or an acid. It will be apparent that the backing layer in the Ming Feng patent is polytetrafluoroethylene, per se. Such a layer is not conductive. While U.S. Patent 3,385,780 mentions a single unit electrode involving finely divided carbon in mixture with PTFE in the single layer, there is no specific disclosure of using carbon black or the use of a conductive backing layer.

## DESCRIPTION OF THE INVENTION

The present invention contemplates the use of carbon black as defined in an article entitled "FUNDAMENTALS OF CARBON BLACK TECHNOLOGY" by Frank Spinelli appearing in the AMERICAN INK MAKER, August, 1970. Carbon black is a generic term referring to a family of industrial carbons which includes lampblacks, channel blacks, furnace blacks and thermal blacks. In general, carbon black is made by incomplete combustion or thermal decomposition of a liquid or gaseous hydrocarbon. A preferred class of carbon blacks are the acetylene carbon blacks, e.g., made from acetylene by continuous thermal decomposition, explosion, by combustion in an oxygen-deficient atmosphere, or by various electrical processes. Characteristically, these acetylene blacks contain 99.5+ weight percent carbon and have a particle size ranging from about 50 to about 2000 angstrom units. The true density of the acetylene black material is approximately 1.95 grams per cubic centimeter. More preferably, the acetylene black is a commercially available acetylene black known by the designation "Shawinigan Black" and has an average particle size of about 425 Angstroms. Such acetylene blacks are somewhat hydrophobic, e.g., as demonstrated by the fact that the particles thereof float on cold water but quickly sink in hot water.

The hydrophobic electroconductive electrode backing layers were prepared in accordance with this invention by combining the PTFE in particulate form as a dispersion with the acetylene black particles as described above. According to a preferred embodiment of this invention, the acetylene black employed is that having an average particle size of approximately 425 Angstrom units with a standard deviation of 250 Angstom units. The range of particle size is from about 50 to about 2000 Angstroms.

Hydrophobic electroconductive electrode backing (wetproofing) layers were prepared in accordance with this invention by combining the PTFE in particulate form as a dispersion with the carbon black particles.

"Shawinigan Black" (acetylene carbon black) was suspended in hot water and placed in an ultrasonic generator. Gradually a dilute aqueous dispersion of PTFE (du Pont's "Teflon 30"), containing 2 weight percent PTFE, was added thereto to form an intimate mixture thereof. The "Teflonated" mix can contain from about 50 to about 80 weight percent carbon black and from about 20 to about 50 weight percent PTFE. The "Teflonated" carbon black mix was then filtered, dried, treated to remove the PTFE wetting agent (by heating at 300°C for 20 minutes in air or extracting it with chloroform) and briefly chopped to form a granular mix and then fabricated into sheet form either by (a) passing between heated rollers (65 to 90°C) or (b) by dispersion of said PTFE/carbon black particles in a liquid dispersion medium capable of wetting said particles and filtration on a salt (NaCl) bed previously deposited on filter paper or like filtration media, or (c) by spraying the carbon black/PTFE mix in a mixture of water and alcohol, e.g., isopropyl alcohol, on an electrode active layer/current distributor composite assembly and drying to yield a fine-pore wetproofing layer.

In any case, a pore-former can be incorporated into the carbon black/PTFE mix prior to forming the wetproofing layer or sheet, but a pore-former need not be used to obtain a porous sheet. The pore-former can be of the soluble type, e.g., sodium carbonate or the like or the volatile type, e.g., ammonium benzoate or the like. The use of ammonium benzoate as a fugitive, volatile pore-former is described and claimed in U.S. Patent Application Serial No. _____ (Docket 3197), filed in the name of Frank Solomon of even date herewith. The disclosure of this application is incorporated herein by reference.

Whether the wetproofing sheet is formed by rolling, filtration or spraying, the pore-former can be removed by washing (if a soluble one) or heating (if a volatile one) either prior to laminating the wetproofing layer to the current distributor (with the distributor on the gas side) and active layer, or after lamination thereof. In cases where a soluble pore-former is used, the laminate is preferably given a hot $50^{\circ}$ to about $100^{\circ}C$ soak in an alkylene polyol, e.g., ethylene glycol or the like, prior to water washing for 10 to 60 minutes. The ethylene glycol hot soak combined with water washing imparts enhanced resistance of such laminated electrodes to blistering during water washing and is the subject matter described and claimed in U.S. Patent Application Serial No. _____ (Docket 3200) entitled "Electrode Layer Treating Process" and filed of even date herewith in the name of Frank Solomon. The disclosure of this application is incorporated herein by reference.

When the wetproofing layer is formed by filtration, it can be released from the filter media by washing with water to dissolve the salt bed, drying and pressing lightly to consolidate same, followed by laminating to the current distributor and active layer. Alternatively, the filter paper/salt/wetproofing layer assembly can be laminated to the current distributor and active layer (with the filter paper side away from the current distributor and the wetproofing layer side in contact with the current distributor) followed by dissolving the salt away.

The testing of the electroconductive, hydrophobic backing layers of this invention in the corrosive environment of use of a chlor-alkali cell has revealed a desirable combination of electroconductivity with balanced hydrophobicity and said layer is believed to have achieved a much desired result in the oxygen (air) cathode field.

The invention will be further illustrated in the examples which follow in which parts, percents and ratios are by weight unless otherwise indicated.

## EXAMPLE 1

(Preparation of PTFE/Carbon Black)

One and one-half (1.5) grams of "Shawinigan Black," hereinafter referred to as "SB," were suspended in 30 mls of hot water ($80^{\circ}C$) and placed in a small ultrasonic bath (Model 250, RAI Inc.) where it was simultaneously stirred and ultrasonically agitated.

Sixty-eight one hundredths (0.68) ml of du Pont "Teflon 30" aqueous PTFE dispersion was diluted with 20 mls of water and added dropwise from a separatory funnel to the SB dispersion gradually, over approximately a 10-minute period with stirring, followed by further stirring for approximately one hour. This material was then filtered, washed with water and dried at $110^{\circ}$C. The dried material was spread out in a dish and heated at $300^{\circ}$C in air for 20 minutes to remove the PTFE wetting agent (employed to stabilize PTFE in water dispersion in the first instance).

## EXAMPLE 2
(PTFE/SB Wetproofing Layer by Filtration Method)

A PTFE/SB conductive, hydrophobic wetproofng layer or sheet was prepared by the filtration method as follows: two hundred twenty five (225) milligrams of the PTFE discontinuously coated SB, prepared in accordance with Example 1, were chopped in a small high speed coffee grinder (Varco Model 228-1, made in France) for about 30 to 60 seconds and then dispersed in 250 mls of isopropyl alcohol in a Waring Blender. This dispersion was then filtered onto a "salt paper," viz., NaCl on filter paper, of 17 $cm^2$ area to for a cohesive, self-sustaining wetproofing layer having 10.6 $mg/cm^2$ by weight (20 mg total).

Resistivity of this wetproofing layer was measured and found to be 0.53 ohm-centimeters. The resistivity of pure PTFE (from "Teflon 30") is greater than $10^{15}$ ohm-cm by way of comparison.

The resistivity of the PTFE/SB carbon black wetproofing layer illustrates that it is still low enough to be useful in forming electrodes when in intimate contact with a current distributor.

Permeability is an important factor in high current density operation of a gas electrode having hydrophobic (conductive or nonconductive) backing, viz., a wetproofing or liquid barrier layer.

The wetproofing layers of this invention have adequate permeability to be comparable to that of pure PTFE backings (even when pressed at up to 5 tons/$in^2$) yet have far superior electroconductivity.

Although in accordance with this invention, the laminated electrodes are usually made with the PTFE/carbon black backing layer laminated to the active layer with the current distributor on the active layer side; since said backing layers are electroconductive, the current distributor can be laminated on the backing layer side.

CLAIMS:

1. An electrically-conductive hydrophobic cohesive self-sustaining electrode wetproofing layer, characterized by comprising carbon black particles in intimate admixture with adherent polytetrafluoroethylene particles.

2. An electrode wetproofing layer as claimed in claim 1, wherein the carbon black particles have a particle size in the range from 50 to 3000 angstroms.

3. An electrode wetproofing layer as claimed in claim 1 or 2, wherein the carbon black is an acetylene carbon black.

4. A method of preparing an electrically-conductive hydrophobic cohesive self-sustaining electrode wetproofing layer as defined in any of claims 1 to 3, which comprises intimately mixing the particles of carbon black with the adherent particles of polytetrafluoroethylene and then forming a sheet or layer thereof.

5. A method as claimed in claim 4, wherein the sheet or layer is formed by passing the mixture of polytetrafluoroethylene and carbon black particles through heated rollers.

6. A method as claimed in claim 4, wherein the sheet or layer is formed by dispersing the polytetrafluoroethylene and carbon black particles in a liquid dispersing medium capable of wetting the particles and then filtering the particles from the dispersion on a soluble salt bed-filter medium.

7. A method as claimed in claim 6, wherein the sheet or layer is released from the salt bed-filter medium by washing with a solvent for the salt.

8. A method as claimed in claim 6 or 7, wherein the soluble salt is sodium chloride and the solvent is water.

| | **DOCUMENTS CONSIDERED TO BE RELEVANT** | | | **CLASSIFICATION OF THE APPLICATION (Int. Cl.³)** |
|---|---|---|---|---|
| Category | Citation of document with indication, where appropriate, of relevant passages | Relevant to claim | | |
| P | US - A - 4 233 181 (GLEN J. GOLLER)     (11-11-1980)<br>* Column 1, lines 26-68; column 2, lines 1,2 *<br>-- | 1,4,6 | | C 25 B 11/12<br>C 08 L 27/18<br>C 09 C  1/56<br>H 01 M  4/88 |
| | US - A - 3 857 737 (FRED S. KEMP)<br>* Column 1, lines 15-23 *<br>---- | 1 | | |

**TECHNICAL FIELDS SEARCHED (Int. Cl.³)**

C 25 B

C 08 L

C 09 C

H 01 M

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family.
· corresponding document

X  The present search report has been drawn up for all claims

| Place of search | Date of completion of the search | Examiner |
|---|---|---|
| VIENNA | 26-01-1982 | HEIN |

EPO Form 1503.1   05.78